# EUROPEAN PATENT SPECIFICATION

(11) **EP 4 056 248 B1**
(45) Date of publication and mention of the grant of the patent: **19.02.2025**
(21) Application number: 20884493.6
(22) Date of filing: 02.11.2020
(51) Int. Cl.: B01D 19/04, C08L 83/00, C08L 71/02, C09K 5/06, C08K 3/36, C09D 201/00, C09D 7/65, C08G 77/16, C08G 77/46, C08K 5/06, C08L 83/12, C09D 7/20, C09D 7/61

(54) **WATER-SOLUBLE SILICONE ANTI-FOAMING AGENT COMPOSITION AND AQUEOUS COATING MATERIAL CONTAINING SAME**
WASSERLÖSLICHE SILIKONHALTIGE ANTISCHAUMMITTEL-ZUSAMMENSETZUNG UND WÄSSRIGES BESCHICHTUNGSMATERIAL DAMIT
COMPOSITION D'AGENT ANTIMOUSSE À BASE DE SILICONE SOLUBLE DANS L'EAU ET MATÉRIAU DE REVÊTEMENT AQUEUX LA CONTENANT

(30) Priority: 06.11.2019 JP 2019201148
(43) Date of publication of application: 14.09.2022
(73) Proprietor: Dow Toray Co., Ltd., Tokyo 140-8617 (JP)
(72) Inventor: AKINAGA Keiichi, Ichihara-shi Chiba 299-0108 (JP)
(74) Representative: Murgitroyd & Company
(86) International application number: PCT/JP2020/041053
(87) International publication number: WO 2021/090803

(56) References cited:
- CN-A- 109 651 617
- JP-A- 2005 336 285
- JP-A- 2011 236 426
- JP-A- 2017 132 923
- JP-A- 2017 226 800
- US-A- 5 106 535

## Description

### TECHNICAL FIELD

The present invention relates to a water-soluble silicone defoaming agent composition and a water-based paint containing the same. The present invention further relates to a water-based paint defoaming method and quality maintaining method, which are characterized by the addition of the water-soluble silicone defoaming agent composition.

### BACKGROUND ART

Conventionally, silicone-based defoaming agents exhibit a defoaming effect at a smaller added amount than non-silicone-based defoaming agents such as alcohol-based, ester-based, mineral and vegetable oils, synthetic oils, and the like, and thus are widely used as foam breakers and foam inhibitors in the chemical industry, food industry, petroleum industry, textile industry, plastic industry, cement industry, paint and adhesive industry, and other fields. Various compositions have been proposed. In particular, a silicone-based defoaming agent containing polyether-modified silicone, such as a polyoxyalkylene-modified group or the like, and optionally, polypropylene glycol and the like are in a liquid form and have excellent dispersibility in water. Therefore, a stock solution can be dispersed (diluted) as is or in water and then added to/blended with a liquid having foaming properties, such that foaming thereof can be effectively suppressed, resulting in excellent handling workability, an initial foaming effect, and the like and the ability to be widely industrially used. (For example, Patent Documents 1 to 5)

However, even though these silicone-based defoaming agents are water-dispersible, they do not solubilize uniformly in an aqueous phase, resulting in suspension of the aqueous phase, reduced transparency, and the like, which limits uses thereof. Note that Patent Document 6 proposes adding polyether-modified silicone, a polyhydric alcohol alkyl ether, and optionally, a water-soluble polymer, such as polyvinyl alcohol or the like, to a silicone-based defoaming agent. However, when the components disclosed in this document are used, this only improves water dispersion and does not lead to solubilization. Therefore, a water-soluble silicone defoaming agent composition that can be uniformly solubilized in an aqueous phase and has excellent defoaming properties and storage stability is strongly desired.

### Related Art Documents

### Patent Documents

Patent Document 1: US Patent No. 3233986
Patent Document 2: Japanese Unexamined Patent Application S54-149388
Patent Document 3: Japanese Unexamined Patent Application No. S56-48211
Patent Document 4: Japanese Unexamined Patent Application No. S63-147507
Patent Document 5: Japanese Unexamined Patent Application H07-185212
Patent Document 6: Japanese Unexamined Patent Application 2000-246009

### SUMMARY OF THE INVENTION

### PROBLEM TO BE SOLVED BY THE INVENTION

In addition to the problems above, the present applicant discovered a new problem related to the present invention. Low molecular weight alcohols, such as isopropanol (IPA) and the like, are widely used as dispersion media in silicone-based defoaming agents for the purpose of improving dispersibility in water and storage stability. However, in recent years, the World Health Organization (WHO) and the like have been strongly demanding so-called VOC-free industrial products, which release a minimal amount of low boiling point or volatile organic compounds, so-called volatile organic compounds (VOC), into the environment, IPA with a boiling point of 82°C is defined by the WHO as a volatile organic compound (VOC, boiling point: 50 to 260°C), and also as a very volatile organic compound (VVOC, boiling point: 100°C or less). Therefore, use thereof is not preferred from the perspective of environmental load reduction/eco-friendliness. However, alcohols that can be used as a dispersion media for a silicone-based defoaming agent, including IPA, are VOCs or VVOCs. It is not necessary to use these dispersion media substantially, and there is no known silicone-based defoaming agent that requires virtually no use of these dispersants and that has excellent solubility in water, making it impossible to provide a silicone-based defoaming agent product with minimal environmental impact.

Furthermore, the present applicant discovered a new problem related to the present invention. In addition to storage stability, silicone-based defoaming agents are generally made into products, when added to water-based paints and other industrial products, food products, cosmetics, and the like, by adding a preservative, a disinfectant, and an antibacterial agent, from the perspective of suppressing the generation of viable bacteria and maintaining quality control and safety of the products. However, there are also highly toxic components among preservatives and disinfectants, and thus there is a need for industrial products with a lower used amount thereof or that are free of preservatives/disinfectants. On the other hand, there is no known silicone-based defoaming agent that practically does not require the use of a preservative/disinfectant and that has excellent solubility in water, and it has not been possible to provide a preservative/disinfectant-free silicone-based defoaming agent product as described above.

In other words, an object of the present invention is to provide a water-soluble silicone defoaming agent composition that can be uniformly solubilized with regard to an aqueous phase, is free of volatile organic compounds (VOC) as defined by the WHO, and has excellent defoaming properties and storage stability. Furthermore, an object of the present invention is to provide a water-soluble silicone defoaming agent composition that is free of preservatives/disinfectants, if necessary, but does not impair storage stability and quality, and is less likely to cause problems with viable bacteria when blended in a water-based paint and the like.

Similarly, an object of the present invention is to provide a water-based paint additive and a water-based paint using the water-soluble silicone defoaming agent composition described above, and to provide a water-based paint defoaming method and quality maintaining method, which are characterized by the addition of the water-soluble silicone defoaming agent composition.

### MEANS FOR SOLVING THE PROBLEM

As a result of extensive studies to solve the aforementioned problems, the present inventors discovered that the aforementioned problems can be solved by a water-soluble silicone defoaming agent composition using in combination polyether-modified silicone or the like with an average value of HLB in a specific range, one or more types selected from triethylene glycol mono-n-butyl ether, and triethylene glycol butyl methyl ether, and water, thereby arriving at the present invention.

Specifically, the water-soluble silicone defoaming agent composition of the present invention contains: (A) one or two or more types of polyether-modified silicone, polyglycerin-modified silicone, or a mixture thereof, in which the average value of HLB is within a range of 0.5 to 5.0; (B) one or more types selected from triethylene glycol mono-n-butyl ether and triethylene glycol butyl methyl ether; and (C) water. Herein, component (B) above, and particularly preferably triethylene glycol mono-n-butyl ether, is a component that, when used in combination with component (A) and component (C), can specifically achieve water solubility, and is not a VOC as defined by the WHO due to having a boiling point of 260°C or higher. Thus, a VOC-free composition can be designed as needed. Furthermore, by using component (B) above, the growth of viable bacteria in the composition is strongly inhibited, and a silicone defoaming agent composition free of preservatives/disinfectants, if necessary, and a water-based paint containing the composition can be designed. Note that the technical effect cannot be achieved with other similarly structured triethylene glycol alkyl ethers.

### EFFECTS OF THE INVENTION

The water-soluble silicone defoaming agent composition of the present invention has sufficient defoaming properties and storage stability for practical use, can be uniformly solubilized in an aqueous phase, and does not cause turbidity or phase separation problems. Furthermore, the water-soluble silicone defoaming agent composition of the present invention can achieve being free of volatile organic compounds (VOC), as defined by the WHO, and can provide a water-soluble silicone defoaming agent composition, water-based paint, and the like that are free of preservatives/disinfectants, if necessary.

Furthermore, the water-soluble silicone defoaming agent composition can provide a water-based paint additive and water-based paint. Furthermore, a water-based paint defoaming method and quality maintaining method can be provided, which are characterized by the addition of the water-soluble silicone defoaming agent composition.

### DESCRIPTION OF THE PREFERRED EMBODIMENT

A water-soluble silicone defoaming agent composition of the present invention will be described. The composition may contain (A) one or two or more types of polyether-modified silicone, polyglycerin-modified silicone, or mixture thereof, in which the average value of HLB is within a range of 0.5 to 5.0, (B) one or more types selected from triethylene glycol mono-n-butyl ether, and triethylene glycol butyl methyl ether, and (C) water, and may optionally further contain, (D) one or two or more types of nonionic surfactants (excluding component (A)) in which the average value of HLB is 2.0 to 12.0, (E) hydrophobic silica, (F) an organopolysiloxane having a silanol group on an end of a molecular chain, (G) polypropylene glycol, and the like. Note that the "HLB value" in the water-soluble silicone defoaming agent composition of the present invention is a calculated value given by Griffin's formula based on the molecular structure of a target.

### (Component (A))

Component (A) of the present invention is one or two or more types of polyether-modified silicone, polyglycerin-modified silicone, or mixture thereof, in which the average value of HLB is within a range of 0.5 to 5.0, and which is an essential component for solubilizing in water a defoaming component such as a defoaming compound or the like containing hydrophobic silica to be described later and/or an organopolysiloxane having a silanol group at an end of a molecular chain, when used in combination with components (B) and (C).

Component (A) is a silicone compound having at least one polyether-modified group represented by a polyoxyalkylene group or a polyglycerin-modified group with two or more glycerol units in a molecule. Examples include one or more types selected from polyether-modified silicone, polyglycerin-modified silicone, polyether-polyglycerin co-modified silicone, and mixtures thereof. Furthermore, the structure of the silicone compound is not limited, and may be straight chain, branched, resinous, and cyclic polysiloxane structures, or may have a block copolymer or cross-linked polysiloxane structure, including structures in which two or more polysiloxane structures are linked or cross-linked by a polyoxyalkylene structure or alkylene structure. Herein, the cross-linked polysiloxane structure is exemplified by an organopolysiloxane having a partially cross-linked structure in which a plurality of straight chain organopolysiloxanes are cross-linked. From the perspective of water solubilization, component (A) is preferably a straight chain or branched polydimethylsiloxane having a polyether-modified group or polyglycerin-modified group on a side chain or end chain, and optionally, may have a decyl group or other long chain alkyl group, or a fluoroalkyl group or a halogenated alkyl group in a molecule.

Component (A) is preferably a polyether-modified silicone having a polyoxyalkylene group in a molecule, and particularly preferably has a polyoxyalkylene group expressed by -R¹-O(C₂H₄O)ₚ(C₃HeO)_{q}-R² (where R¹ represents a divalent hydrocarbon group with 1 to 4 carbon atoms, R² represents a hydrogen atom or an alkyl group with 1 to 6 carbon atoms, and p and q are integers satisfying 10 ≤ p + q ≤ 100, 10:90 ≤ p:q ≤ 100:0). Hereinafter, the C₂H₄O unit may be referred to as "EO" and the C₃H₆O unit may be referred to as "PO". Note that examples of the divalent hydrocarbon group with 1 to 4 carbon atoms servings as R¹ include methylene groups, ethylene groups, propylene groups, and butylene groups, and examples of the alkyl group with 1 to 6 carbon atoms serving as R² include methyl groups, ethyl groups, propyl groups, butyl groups, pentyl groups, and hexyl groups.

Component (A) must have an average HLB value within the range of 0.5 to 5.0 from the perspective of water solubility. Herein, "average HLB value" means that if component (A) is one type of polyether-modified silicone or the like, the HLB value thereof is within the range of 0.5 to 5.0, but if component (A) is a mixture of two or more types of polyether-modified silicone and the like, the average HLB value of the individual polyether-modified silicone and the like based on mass ratio is within the range of 0.5 to 0.5. In other words, when component (A) is a mixture of two or more types of polyether-modified silicone and the like, the individual polyether-modified silicone and the like may have an HLB value that is less than 0.5 or more than 5.0.

Particularly suitably, component (A) is (A1) a polyether-modified silicone or mixture thereof, in which the average value of HLB is within a range of 1.0 to 4.0, and the average value of HLB is particularly preferably within a range of 1.0 to 3.0, 1.1 to 2.5, or 1.2 to 2.0.

Component (A) is not particularly limited in terms of the molecular weight and viscosity (25°C) thereof so long as the average HLB value conditions above are satisfied. However, from the perspective of handling workability and blending stability in the water-soluble silicone defoaming agent composition, the kinematic viscosity at 25°C is preferably within a range of 5 to 10,000 mPa-s, and particularly preferably within a range of 100 to 5000 mPa-s.

### (Component (B))

Component (B) of the present invention is one or more types selected from triethylene glycol mono-n-butyl ether and triethylene glycol butyl methyl ether, and is preferably triethylene glycol mono-n-butyl ether (may be referred to as "butoxytriglycol" or "butyltriglycol" as a trade name). Component (B) is a component that can achieve solubilization of the silicone defoaming agent composition of the present invention in water when used in combination with component (A) and component (C), and is not a VOC as defined by the WHO due to having a boiling point of 260°C or higher. Thus, a VOC-free composition can be designed for the composition of the present invention. Note that other similarly structured triethylene glycol alkyl ethers cannot achieve the technical effect, and therefore, at least one of the two types described above, and preferably triethylene glycol mono-n-butyl ether must be used.

Furthermore, the present applicant discovered that by using one or more types selected from triethylene glycol mono-n-butyl ether and triethylene glycol butyl methyl ether, the growth of viable bacteria is strongly inhibited in the silicone defoaming agent composition and a water-based paint formulated with the composition, and a preservative/disinfectant-free composition can be designed. A similar effect, and particularly an effect comparable to commonly used preservatives, has not been identified with other dispersion media.

### (Component (C))

Component (C) is water, or is a component that forms an aqueous phase in which a defoaming component such as a defoaming compound or the like containing an organopolysiloxane of the composition, an arbitrary nonionic surfactant, and a water-soluble arbitrary component such as polypropylene glycol or the like are dispersed, or is a component, when used with components (A) and (B) above, that can achieve solubilization of the entire silicone defoaming agent composition in water. Note that the water may also contain other arbitrary water-soluble components to be described later.

The water is preferably clean and free of components that interfere with the storage stability of the silicone defoaming agent composition, and examples include ion-exchanged water, distilled water, well water, and tap water. Note that from the from the perspective of designing a preservative/disinfectant-free composition, for practical purposes, the water is preferably ozone water or clean water in which the growth of bacteria is inhibited by heating, filtration, or the like.

The silicone defoaming agent composition of the present invention requires components (A) to (C) above, and when the entire composition is 100 mass%,
the amount of component (A) above is preferably within a range of 1 to 70 mass%, more preferably within a range of 5 to 50 mass%, and particularly preferably 5 to 30 mass%,
the amount of component (B) above is preferably within a range of 1 to 50 mass%, more preferably within a range of 5 to 50 mass%, and particularly preferably 5 to 30 mass%, and
the amount of component (C) above is preferably within a range of 1 to 70 mass%, more preferably within a range of 5 to 60 mass%, and particularly preferably 5 to 50 mass%.
Note that the silicone defoaming agent composition of the present invention preferably contains an arbitrary component other than components (A) to (C).

### (Component (D))

Component (D) of the present invention is one or two or more types of a nonionic surfactant in which the average value of HLB is 2.0 to 12.0, with component (A) excluded from this range. Combined use of component (D) with component (A) has advantages of further improving the uniformity and storage stability of the entire composition, as well as further improving solubilization and dispersibility in water. On the other hand, if the average value of HLB of the nonionic surfactant is less than the lower limit above, solubilization in water may particularly not be sufficiently improved. Furthermore, if the average value of HLB exceeds the upper limit above, solubility in water and uniformity of the entire composition may be impaired, depending on the combination of silica and organopolysiloxane components to be described later. Note that component (D) may contain a silicone-based nonionic surfactant, such as polyoxyalkylene-modified silicone, polyglyceryl-modified silicone, glyceryl-modified silicone, saccharide-modified silicone, and the like, so long as the component has a different average HLB value from component (A). From the perspective of improving water solubilization, the nonionic surfactant particularly preferably contains an organic compound that does not contain a siloxane bond in a molecule. Furthermore, the average value of HLB of component (D) is preferably 11 or less, and more preferably within a range of 5 to 11 or 6 to 10.

Examples of the nonionic surfactant serving as component (D) include polyoxyalkylene ethers, polyoxyalkylene alkyl ethers, polyoxyalkylene fatty acid esters (for example, those containing polyethylene glycol (or ethylene oxide) and a higher fatty acid (such as a straight chain or branched fatty acid with 12 to 18 carbon atoms)), polyoxyalkylene fatty acid diesters, polyoxyalkylene resin acid esters, polyoxyalkylene (hydrogenated) castor oils, polyoxyalkylene alkyl phenols, polyoxyalkylene alkyl phenyl ethers, polyoxyalkylene phenyl ethers, polyoxyalkylene alkyl esters, polyoxyalkylene alkyl esters, sorbitan fatty acid esters, polyoxyalkylene sorbitan alkyl esters (for example, those containing sorbitan, polyethylene glycol, and a higher fatty acid (such as a straight chain or branched fatty acid with 12 to 18 carbon atoms)), polyoxyalkylene sorbitan fatty acid esters, polyoxyalkylene sorbitol fatty acid esters, polyoxyalkylene glycerol fatty acid esters, polyglycerol alkyl ethers, polyglycerol fatty acid esters, sucrose fatty acid esters, fatty acid alkanolamides, alkylglucosides, polyoxyalkylene fatty acid bisphenyl ethers, polyoxyethylene/polyoxypropylene block polymers, and alkyl polyoxyethylene/polyoxypropylene block polymer ethers.

From the perspective of solubility in water, component (D) is preferably (D1) a polyoxyalkylene monoalkyl ether or mixture thereof, in which the average value of HLB is 11 or less. The average value of HLB thereof may be within a range of 5 to 11 or 6 to 10.

### (Component (E))

Component (E) is hydrophobic silica, and along with component (F), is a component that imparts defoaming properties and defoaming sustainability. Specific examples include hydrophobically treated fumed silica, calcined silica fine powder, precipitated silica fine powder, silica aerogel, quartz fine powder, and fused silica fine powder. In terms of a defoaming effect, these hydrophobic silicas preferably have a BET specific surface area of 50 m2/g or more, and particularly preferably 100 m2/g or more.

A hydrophobization treatment of component (E) is not particularly limited, but it is common to hydrophobize a surface thereof by mixing with a hydrophobic agent represented by component (F), organosilanes and organosiloxane oligomers. A well-known compound can be used as the organosilane or organosiloxane oligomer. Examples of organosilanes include dimethyldichlorosilane, methyltrichlorosilane, hexamethyldisilazane, and dimethyldialkoxysilane. Examples of the organosiloxane oligomer include dimethylsiloxane oligomers blocked with silanol groups at both ends, methylhydrogensiloxane oligomers blocked with trimethylsiloxy groups at both ends, 1,1,3,3-tetramethyldisiloxane, and 1,3,5,7-tetramethylcyclotetrasiloxane. Note that examples of other hydrophobic agents include stearic acids, sodium stearate, vinyl trimethoxysilane, γ-glycidoxypropyltrimethoxysilane, 3-aminopropyltrimethoxysilane, 3-(N-2-aminoethyl)aminopropyltrimethoxysilane, and the like.

### Component (F)

Component (F) is an organopolysiloxane having a silanol group at an end of a molecular chain, which can be mixed alone or with component (E) to form a silicone compound that imparts defoaming properties and defoaming sustainability to the composition.

From the perspective of defoaming properties and water solubilization of the composition, component (F) is preferably a dimethylpolysiloxane having silanol groups at both ends of a molecular chain, and may further optionally contain a hydrophobic functional group such as a fluoroalkyl or the like. The kinematic viscosity of component (F) at 25°C is not particularly limited, but may be within a range of 1.5 to 100,000 mPa-s, is preferably within a range of 5.0 to 10,000 mPa-s, and is more preferably within a range of 5.0 to 5,000 mPa-s. In particular, an example of component (F) of the present invention is (F1) dimethylpolysiloxane having silanol groups at both ends of a molecular chain, and the viscosity at 25°C is preferably within a range of 5.0 to 1,000 mPa-s.

When component (E) and component (F) are used together to form a defoaming silicone compound, the mass ratio of component (F) to component (E) is preferably within a range of 100 : 1 to 50. If the mass ratio of component (F), which is hydrophobic silica, is less than 1, expected defoaming properties and defoaming sustainability may not be achieved. On the other hand, if the amount exceeds 50, it may be difficult to prepare a uniform defoaming agent composition. Note that it goes without saying that, from the perspective of defoaming properties, component (E) or component (F) alone may be used.

### [Component (G)]

Component (G) is polypropylene glycol, and is preferably a component that is used in combination with components (A) through (E) above to improve defoaming properties and defoaming sustainability of the entire silicone defoaming agent composition of the present invention. In particular, by using triethylene glycol mono-n-butyl ether as component (A) and polypropylene glycol as component (G), it is possible to provide a silicone defoaming agent composition with excellent uniformity and solubility in water, and further improved defoaming properties and defoaming sustainability.

Components (D) to (G) described above are arbitrary configurations of the present invention, and when the entire composition is 100 mass%,
the amount of component (D) above is preferably within a range of 0 to 40 mass%, more preferably within a range of 5 to 40 mass%, and particularly preferably 5 to 35 mass%;
the amount of component (E) above is preferably within a range of 0 to 5 mass%, more preferably within a range of 0.1 to 3 mass%, and particularly preferably 0.2 to 2 mass%;
the amount of component (F) above is preferably within a range of 0 to 10 mass%, more preferably within a range of 0.2 to 8 mass%, and particularly preferably 0.5 to 6 mass%; and
the amount of component (G) above is preferably within a range of 0 to 50 mass%, more preferably within a range of 0 to 30 mass%, and particularly preferably 5 to 25 mass%.

### [Other Optional Components]

The silicone defoaming agent composition of the present invention may contain other emulsifiers, alcohols, solvents, stabilizers, thickeners, preservatives, pH adjusters, and the like to an extent that does not impair an object of the present invention. The added amount of the defoaming agent composition of the present invention to an object when used is determined based on various conditions such as a target process, the nature of the defoaming object, the effect on the physical properties of a final product, and the like. However, as a general guide, if a high concentration of the defoaming agent composition with a low amount of water is used, the added amount is preferably 1 to 500 ppm, and if a low concentration of the defoaming agent composition with high amount of water is used, the amount is preferably 100 to 10,000 ppm.

On the other hand, the silicone defoaming agent composition of the present invention can be VOC-free as defined by the WHO and can be preservative/disinfectant-free, based on the selection of component (B). Therefore, with these technical intentions, it is particularly preferable not to use alcohols or solvents having a low boiling point and not to use a preservative or the like. For example, to be preservative/disinfectant-free, the amount of a preservative or disinfectant component is 0.05 mass% or less of the total water-based paint containing the silicone defoaming agent composition, and preservatives and disinfectants are particularly preferably essentially not included.

### [Producing Method]

The silicone defoaming agent composition of the present invention can be produced by uniformly mixing the aforementioned components (A) to (C) and another component using mechanical power such as a mixer or the like. The stirring/mixing device is not particularly limited, so long as the device is capable of preparing and uniformly stirring raw materials. The temperature conditions during stirring is also not particularly limited so long as uniform mixing is possible, and heating up to approximately 50°C may be performed in order to reduce viscosity, and the like. Note that components (E) and (F) described above may be pre-mixed and blended in the form of a silicone compound, or water-soluble components may be pre-mixed in water serving as component (C) and then stirred uniformly throughout. Furthermore, if necessary, each component may be stirred uniformly and then further processed in a colloid mill, ball mill, dispermill, homogenizer, Gaulin homogenizer, other highpressure emulsifying devices capable of applying high shear force, or the like.

### [Application]

The water-soluble silicone defoaming agent composition of the present invention is effective for aqueous foaming solutions, and can be particularly suitably used as defoaming agent for paint (aqueous paint, paper coating paint, and the like) and various manufacturing processes (paper making process, fermentation process, wastewater treatment process, monomer stripping process, polymer polymerization process, and the like). Moreover, by being soluble in an aqueous phase, it is possible to achieve excellent defoaming or foam suppression effects while maintaining a transparent to semi-transparent and uniform appearance.

In particular, the water-soluble silicone defoaming agent composition is suitable as an additive for water-based paint, and is even more suitable as a defoaming agent for aqueous paint. It is particularly suitable as a defoaming agent for emulsion-containing aqueous paints and paper coating paints of water-based paints (aqueous architectural exterior paints, architectural interior paints, aqueous inks and paper coating paints, and the like). Note that examples of emulsions used in emulsion paints include emulsions of vinyl acetate resins, acrylic resins, styrene resins, halogenated olefin resins, urethane resins, silicone resins, or fluorine-containing silicone resins, all of which are effective, and are particularly effective for acrylic paints containing acrylic resin, acrylic styrene-based paints, acrylic urethane-based paints, and acrylic silicone-based paints. The water-soluble silicone defoaming agent composition of the present invention is effective for all water-based paints, including alcohol-based and emulsion-based paints, due to uniform solubilization in an aqueous phase. Thus, unlike a conventional emulsion-type silicone defoaming agent and suspension-type silicone defoaming agent, the composition of the present invention uniformly solubilizes in an aqueous phase of the paint, and therefore is less likely to affect the stability of a formulation, emulsion, and the like, and can achieve high defoaming or foam inhibiting performance.

When applied to the water-based paints described above, the water-soluble silicone defoaming agent composition of the present invention may be added at the time of pigment dispersion or after creating the paint, but is particularly preferably added after creating the paint with an aqueous phase as a continuous layer. Furthermore, when applied to various manufacturing processes, it can be added (1) when providing a raw material, (2) prior to heating and/or a decompression treatment, and/or (3) in the final finishing process, or the like.

The added amount of the water-soluble silicone defoaming agent composition of the present invention is within a range of 0.01 to 2.0 mass% of the solid fraction of the water-based paint, more preferably a range of 0.05 to 1.0 mass%, and particularly preferably a range of 0.05 to 0.5 mass%, based on the solid fraction.

### Water-Based Paint Defoaming Method and Quality Preserving Method

The water-soluble silicone defoaming agent composition of the present invention can suitably be blended in a water-based paint at the added amount described above to achieve a defoaming or foam inhibiting effect. Furthermore, as described above, the use of component (B) allows the water-soluble silicone defoaming agent composition of the present invention itself to strongly inhibit the growth of viable bacteria and can be used to preserve the quality of the water-based paint (including antibacterial and deterioration-preventing effects), making it possible to achieve a substantially preservative/disinfectant-free composition for water-based paints.

### EXAMPLES

The water-soluble silicone defoaming agent composition of the present invention and a water-based paint containing the composition will be described in further detail based on Examples. Note that the viscosity is a value measured by a rotational viscometer at 25°C.

### Appearance and Presence of Phase Separation

The appearance and phase separation were visually evaluated and rated as "transparent" or "turbid".

Note that if even a small amount of separation was observed, it was evaluated as "separation present", and if the entire product was uniform, it was evaluated as "uniform (no phase separation)".

Evaluation of Defoaming Properties: Evaluation based on liquid surface height after stirring and number of bubbles after 30 seconds

In a 55 mm diameter glass bottle, 50 g of a coating agent having the following composition was inserted, and the silicone defoaming agent of the present invention or a silicone oil other than the defoaming agent was added at 0.4 mass% to prepare a sample. For this, an edged turbine-type agitator was used to stir at a rotational speed of 5,000 rpm for 1 minute, and the height of the liquid surface immediately after stirring was stopped was measured to evaluate defoaming properties (liquid surface height after stirring (mm)).

**[Table 1]**

| | | | |
|---|---|---|---|
| (1) | U-double^{®} E-135 (manufactured by Nippon Shokubai Co., Ltd.) | **52.00** | Parts |
| (2) | TIPAQUE CR-90 (manufactured by ISHIHARA SANGYO KAISHA, LTD.) | **20.00** | Parts |
| (3) | Barium sulfate (manufactured by FUJIFILM Wako Pure Chemical Corporation) | **4.30** | Parts |
| (4) | Sodium hexametaphosphate (manufactured by FUJIFILM Wako Pure Chemical Corporation) | **0.10** | Parts |
| (5) | ADEKA Pluronic L-64 (manufactured by ADEKA CORPORATION) | **0.30** | Parts |
| (6) | Texanol (manufactured by Eastman Chemical Japan) | **4.00** | Parts |
| (7) | Hydroxyethylcellulose (FUJIFILM Wako Pure Chemical Corporation) | **0.10** | Parts |
| (8) | Water | **19.20** | Parts |
| | | 100.00 | Parts |

Furthermore, the same sample was painted (20 times back and forth) on a 200 mm x 300 mm tin-plated steel sheet by a medium pile roller, and then defoaming properties (number of bubbles after 30 seconds) were evaluated based on the number of bubbles (diameter: 1.0 mm or more) in an area of 10 cm x 15 cm in a center portion after 30 seconds.

### Flatness/Uniformity of Coating Film

The aforementioned sample was applied on a 150 mm x 50 mm glass sheet by a bar coater #16, and then the number of pinholes generated in a 10 cm x 10 cm area on a coating surface was visually evaluated.

The number of pinholes generated was rated as "favorable" if the number was 5 or less, and "poor" if the number was 6 or more. The number of pinholes was recorded.

### Viable Bacteria Test

Test samples were inoculated with the test bacterial solutions prepared after pre-culture, and after a certain period of time, the viable bacterial count was measured to evaluate the preservation efficacy. The bacterial species include Escherichia coli, Pseudomonas aeruginosa, Staphylococcus aureus, Candida albicans, Aspergillus brasiliensis and Pseudomonas fluorescens.

Note that no viable bacteria test was conducted for test bodies for which a uniform sample could not be obtained.

The following components were used in the Examples and Comparative Examples.
A-1) Polyether-modified silicone having a polyether structure containing an EO unit and PO unit in a molecule (HLB: 1.6, molecular weight: 10,000, viscosity: 650 mPa-s)
A-2) Polyether-modified silicone having a polyether structure containing an EO unit only in a molecule (HLB: 1.8, molecular weight: 5000, viscosity: 150 mPa-s)
   Of the following B-1) to B-14), only components B-1) and B-14) are components (B) of the present invention used in the Examples, and the others are similar compounds and alcohols for comparative experiments.
B-1) Triethylene glycol mono-n-butyl ether, purity > 98%, manufactured by Tokyo Chemical Industry Co., Ltd.
B-2) Diethylene glycol mono-n-butyl ether, purity > 98%, manufactured by FUJIFILM Wako Pure Chemical Corporation

### Others

B-3) 2-propanol, purity > 99.7%, manufactured by FUJIFILM Wako Pure Chemical Corporation
B-4) Dipropylene glycol monomethyl ether, purity > 95%, manufactured by FUJIFILM Wako Pure Chemical Corporation
B-5) Tripropylene glycol monobutyl ether, purity > 95%, manufactured by KANTO KAGAKU
B-6) Triethylene glycol, purity > 98%, manufactured by Alfa Aesar
B-7) Tetraethylene glycol, purity > 95%, manufactured by Tokyo Chemical Industry Co., Ltd.
B-8) Tetraethylene glycol dimethyl ether, purity > 98%, manufactured by Tokyo Chemical Industry Co., Ltd.
B-9) Triethylene glycol dimethyl ether, purity > 97%, FUJIFILM Wako Pure Chemical Corporation
B-10) 2-butoxyethanol/ethylene glycol mono-n-butyl ether, purity > 99%, FUJIFILM Wako Pure Chemical Corporation
B-11) Triethylene glycol dimethyl ether, purity > 97%, FUJIFILM Wako Pure Chemical Corporation
B-12) Triethylene glycol monomethyl ether, purity > 98%, manufactured by Tokyo Chemical Industry Co., Ltd.
B-13) 2-ethoxyethyl acetate, purity > 98%, KANTO KAGAKU
B-14) Triethylene glycol butyl methyl ether, purity > 97%, FUJIFILM Wako Pure Chemical Corporation
(C) Water: Ion-exchanged water
D-1) Nonionic surfactant: Trade name SANNONIC SS-30 (Manufactured by Sanyo Chemical Industries, Ltd.), HLB = 8
D-2) Nonionic surfactant: Trade name SANNONIC SS-50 (Manufactured by Sanyo Chemical Industries, Ltd.), HLB = 10.5
E) Hydrophobic silica: Trade name AEROSIL R-972 (manufactured by NIPPON AEROSIL CO., LTD.)
F) Dimethylpolysiloxane having silanol groups at both ends of a molecular chain (molecular weight: 900, viscosity: 40 mPa-s)
G) Polypropylene glycol: Trade name SANNIX PP-2000 (Sanyo Chemical Industries, Ltd.)

### Examples 1 to 4 and Comparative Examples 1 and 2

The components above were stirred and mixed uniformly by mechanical power (mixer) to achieve the concentrations (mass%) listed in Table 1 to prepare a water-soluble silicone defoaming agent, which was then allowed to stand for 24 hours or 1 week. The appearance thereof and the presence or absence of phase separation were determined by the methods above, which are recorded in Table 1.

Furthermore, 0.4 parts by mass (%) of an acrylic emulsion (U-double (registered trademark) E-135 manufactured by Nippon Shokubai Co., Ltd.) was added and then mixed uniformly by mechanical power (mixer). The defoaming performance and the like thereof were evaluated by the aforementioned method, which are shown in the table below.

**[Table 2]**

| | Examples | | | | Comparative Examples | | |
|---|---|---|---|---|---|---|---|
| | 1 | 2 | 3 | 4 | 1 | 2 | 3 |
| A-1) Polyether-modified silicone (HLB 1.6) | 16.45 | | 16.45 | 16.45 | 16.45 | 16.45 | 16.5 |
| A-2) Polyether-modified silicone (HLB 1.8) | | 26.3 | | | | | |
| B-1) Triethylene glycol mono-n-butyl ether | 13.5 | 14.8 | 23.5 | 13.5 | | | |
| B-2) Diethylene glycol mono-n-butyl ether | | | | | | 13.5 | |
| B-3) 2-propanol | | | | | | | 13.5 |
| C) Water | 23.15 | 25.4 | 23.15 | 23.15 | 0 | 23.15 | 23.15 |
| D-1) Nonionic surfactant (HLB 8) | 28.35 | 32.4 | 18.35 | | 0 | 28.35 | 28.35 |
| D-2) Nonionic surfactant (HLB 10.5) | | | | 28.35 | | | |
| E) Hydrophobic silica | 1.05 | 1.1 | 1.05 | 1.05 | 1.05 | 1.05 | 1.05 |
| F) Silanol-terminated dimethylpolysiloxane | 3.5 | 0 | 3.5 | 3.5 | 3.5 | 3.5 | 3.5 |
| G) Polypropylene glycol | 14 | 0.00 | 14 | 14 | 79 | 14 | 14 |
| Water solubility | Solubilized | Solubilized | Solubilized | Solubilized | Does not disperse in water | Does not disperse in water | Does not disperse in water |
| Appearance | Semi-transparent | Semi-transparent | Semi-transparent | Semi-transparent | Turbid | Turbid | Turbid |
| Presence of phase separation | Uniform | Uniform | Uniform | Uniform | Phase separation | Phase separation | Phase separation |
| Defoaming properties (white paint) | 0 | 0 | 0 | 0 | 21 | 30 | |
| Number of bubbles after 30 seconds | | | | | | | |
| Defoaming properties (white paint) | 25.76 | 26.71 | 26.55 | 26.71 | 28.98 | 30.22 | - |
| Liquid surface height after stirring (mm) | | | | | | | |
| Coating appearance (Flatness of coating film) | Favorable | Favorable | Favorable | Favorable | Poor | Poor | - |
| | 2 | 5 | 2 | 5 | 20 or more | 20 or more | - |
| Number of pinholes | | | | | | | |
| Viable bacteria test (No preservatives) | Favorable | | | | - | - | - |

### Comparative Examples 4 to 13

Component B-1) in "Example 1" listed in the table above was substituted by components B-4) to B-13), which do not correspond to component (B) of the present invention, and in the same manner as Example 1, were uniformly stirred and mixed by mechanical power (mixer) to prepare a water-soluble silicone defoaming agent, which was then allowed to stand for 24 hours. The presence or absence of phase separation was determined by the aforementioned method and then recorded. As a result, in the Comparative Examples where B-4) to B-13), which do not correspond to component (B) of the present invention, were used, phase separation occurred and a uniform defoaming agent composition could not be obtained.

### Example 5

Component B-1) in "Example 1" listed in the table above was substituted by component B-14), which is component (B) of the present invention, and in the same manner as Example 1, was uniformly stirred and mixed by mechanical power (mixer) to prepare a water-soluble silicone defoaming agent, which was then allowed to stand for 24 hours. The presence or absence of phase separation was determined by the aforementioned method and then recorded. As a result, when the triethylene glycol butyl methyl ether B-14) was used, uniform dispersion occurred, and the composition could be solubilized in water.

### <Summary>

The water-soluble silicone defoaming agents according to the Examples are water soluble, and therefore have excellent handling workability and uniform dispersibility, became uniform and transparent silicone compositions by simply blending in a water-based paint by stirring with a mixer, and did not cause phase separation and the like even after one week. Furthermore, the compositions not only have excellent defoaming properties and obtain a uniform coating film, but also inhibit the growth of viable bacteria over a long period of time without the use of preservatives, antibacterial agents, or disinfectants, are free of antibacterial agents, and have excellent storage stability. Furthermore, all of the components (B) used in the Examples do not correspond to volatile organic compounds, provide the advantages described above, and achieve a water-soluble silicone defoaming agent that is free of volatile organic compounds (VOC).

On the other hand, in the Comparative Examples where component (B) of the present invention was not used, or where a water solubilizing agent component that does not correspond to component (B) was used, the compositions did not disperse in water, and phase separation occurred after becoming cloudy, making practical application difficult. Furthermore, when these compositions were blended into an emulsion paint, the defoaming properties thereof were clearly inferior to those of the Examples and caused coating defects such as pinholes and the like in the appearance of the coating film. Note that even if IPA (2-propanol), which corresponds to volatile components (VOC), was used instead of component (B) of the present invention, the same technical effect as the present invention could not be achieved (Comparative Example 3).

## Claims

1. A water-soluble silicone defoaming agent composition, comprising:
(A) one or two or more types of polyether-modified silicone, polyglycerin-modified silicone, or a mixture thereof, in which the average value of HLB is within a range of 0.5 to 5.0;
(B) one or more types selected from triethylene glycol mono-n-butyl ether and triethylene glycol butyl methyl ether; and
(C) water.

2. The water-soluble silicone defoaming agent composition according to claim 1, further comprising:
(D) one or two or more types of a nonionic surfactant (excluding component (A)) in which the average value of HLB is 2.0 to 12.0.

3. The water-soluble silicone defoaming agent composition according to claim 1 or 2, further comprising:
(E) hydrophobic silica.

4. The water-soluble silicone defoaming agent composition according to any one of claims 1 to 3, further comprising:
(F) an organopolysiloxane having a silanol group on an end of a molecular chain.

5. The water-soluble silicone defoaming agent composition according to any one of claims 1 to 4, further comprising:
(G) polypropylene glycol.

6. The water-soluble silicone defoaming agent composition according to any one of claims 1 to 5, wherein when the entire composition is 100 mass%,
the amount of component (A) above is within a range of 1 to 70 mass%,
the amount of component (B) above is within a range of 1 to 50 mass%,
the amount of component (C) above is within a range of 1 to 70 mass%,
the amount of component (D) above is within a range of 0 to 40 mass%,
the amount of component (E) above is within a range of 0 to 5 mass%,
the amount of component (F) above is within a range of 0 to 10 mass%, and
the amount of component (G) above is within a range of 0 to 50 mass%.

7. The water-soluble silicone defoaming agent composition according to any one of claims 1 to 6, wherein component (A) above is (A1) a polyether-modified silicone or a mixture thereof, in which the average value of HLB is within a range of 1.0 to 4.0,
the amount of component (B) above is within a range of 10 to 150 parts by mass with respect to 100 parts by mass of component (A) above, and the amount of component (C) above is within a range of 1 to 200 parts by mass with respect to 100 parts by mass of component (A) above.

8. The water-soluble silicone defoaming agent composition according to any one of claims 1 to 7, further comprising:
(D1) polyoxyalkylene monoalkyl ether or mixture thereof, in which the average value of HLB is 11 or less.

9. The water-soluble silicone defoaming agent composition according to any one of claims 1 to 8, which is a water-based paint additive.

10. A water-based paint, comprising the water-soluble silicone defoaming agent composition according to any one of claims 1 to 8.

11. The water-based paint according to claim 10, wherein the amount of a preservative or disinfectant component is 0.05 mass% or less of the total water-based paint.

12. A method of defoaming a water-based paint, comprising a step of adding to a solid fraction of one or more types of a water-based paint, the water-soluble silicone defoaming agent composition according to any one of claims 1 to 8 at 0.01 to 2.0 mass% in terms of the solid fraction.

13. A method of preserving the quality of a water-based paint, comprising a step of adding to a solid fraction of one or more types of a water-based paint, the water-soluble silicone defoaming agent composition according to any one of claims 1 to 8 at 0.01 to 2.0 mass% in terms of the solid fraction.

## Patentansprüche

1. Wasserlösliche Silikon-Entschäumungsmittel-Zusammensetzung, umfassend:
(A) eine oder zwei oder mehrere Arten von polyethermodifiziertem Silikon, polyglycerinmodifiziertem Silikon oder eine Mischung davon, bei denen der durchschnittliche HLB-Wert innerhalb eines Bereichs von 0,5 bis 5,0 liegt;
(B) eine oder mehrere Arten, ausgewählt aus Triethylenglykolmono-n-butylether und Triethylenglykolbutylmethylether; und
(C) Wasser.

2. Wasserlösliche Silikon-Entschäumungsmittel-Zusammensetzung nach Anspruch 1, ferner umfassend:
(D) eine oder zwei oder mehrere Arten eines nichtionischen Tensids (ausgenommen Komponente (A)), bei denen der durchschnittliche HLB-Wert 2,0 bis 12,0 beträgt.

3. Wasserlösliche Silikon-Entschäumungsmittel-Zusammensetzung nach Anspruch 1 oder 2, ferner umfassend:
(E) hydrophobe Kieselsäure.

4. Wasserlösliche Silikon-Entschäumungsmittel-Zusammensetzung nach einem der Ansprüche 1 bis 3, ferner umfassend:
(F) ein Organopolysiloxan, das eine Silanolgruppe an einem Ende einer Molekülkette aufweist.

5. Wasserlösliche Silikon-Entschäumungsmittel-Zusammensetzung nach einem der Ansprüche 1 bis 4, ferner umfassend:
(G) Polypropylenglykol.

6. Wasserlösliche Silikon-Entschäumungsmittel-Zusammensetzung nach einem der Ansprüche 1 bis 5, wobei, wenn die gesamte Zusammensetzung 100 Massen-% beträgt,
die Menge von oben genannter Komponente (A) innerhalb eines Bereichs von 1 bis 70 Massen-% liegt,
die Menge von oben genannter Komponente (B) innerhalb eines Bereichs von 1 bis 50 Massen-% liegt,
die Menge von oben genannter Komponente (C) innerhalb eines Bereichs von 1 bis 70 Massen-% liegt,
die Menge von oben genannter Komponente (D) innerhalb eines Bereichs von 0 bis 40 Massen-% liegt,
die Menge von oben genannter Komponente (E) innerhalb eines Bereichs von 0 bis 5 Massen-% liegt,
die Menge von oben genannter Komponente (F) innerhalb eines Bereichs von 0 bis 10 Massen-% liegt, und
die Menge von oben genannter Komponente (G) innerhalb eines Bereichs von 0 bis 50 Massen-% liegt.

7. Wasserlösliche Silikon-Entschäumungsmittel-Zusammensetzung nach einem der Ansprüche 1 bis 6, wobei die oben genannte Komponente (A) (A1) ein polyethermodifiziertes Silikon oder eine Mischung davon ist, bei der der durchschnittliche HLB-Wert innerhalb eines Bereichs von 1,0 bis 4,0 liegt,
die Menge von oben genannter Komponente (B) innerhalb eines Bereichs von 10 bis 150 Massenteilen liegt, bezogen auf 100 Massenteile von oben genannter Komponente (A), und die Menge von oben genannter Komponente (C) innerhalb eines Bereichs von 1 bis 200 Massenteilen liegt, bezogen auf 100 Massenteile von oben genannter Komponente (A).

8. Wasserlösliche Silikon-Entschäumungsmittel-Zusammensetzung nach einem der Ansprüche 1 bis 7, ferner umfassend:
(D1) Polyoxyalkylenmonoalkylether oder eine Mischung davon, bei der der durchschnittliche HLB-Wert 11 oder weniger beträgt.

9. Wasserlösliche Silikon-Entschäumungsmittel-Zusammensetzung nach einem der Ansprüche 1 bis 8, die ein wasserbasierter Farbzusatz ist.

10. Wasserbasierte Farbe, umfassend die wasserlösliche Silikon-Entschäumungsmittel-Zusammensetzung nach einem der Ansprüche 1 bis 8.

11. Wasserbasierte Farbe nach Anspruch 10, wobei die Menge einer Konservierungs- oder Desinfektionskomponente 0,05 Massen-% oder weniger der gesamten wasserbasierten Farbe beträgt.

12. Verfahren zum Entschäumen einer wasserbasierten Farbe, umfassend einen Schritt eines Hinzufügens der wasserlöslichen Silikon-Entschäumungsmittel-Zusammensetzung nach einem der Ansprüche 1 bis 8, zu einem Feststoffanteil von einer oder mehrerer Arten einer wasserbasierten Farbe in 0,01 bis 2,0 Massen-%, hinsichtlich des Feststoffanteils.

13. Verfahren zum Bewahren der Qualität einer wasserbasierten Farbe, umfassend einen Schritt des Hinzufügens der wasserlöslichen Silikon-Entschäumungsmittel-Zusammensetzung nach einem der Ansprüche 1 bis 8, zu einem Feststoffanteil von einer oder mehreren Arten einer wasserbasierten Farbe in 0,01 bis 2,0 Massen-%, hinsichtlich des Feststoffanteils.

## Revendications

1. Composition d'agent de démoussage à base de silicone hydrosoluble, comprenant :
(A) un ou deux types, ou plus, de silicone à modification polyéther, de silicone à modification polyglycérine, ou d'un mélange de celles-ci, dans laquelle la valeur moyenne de rapport hydrophile-lipophile est à l'intérieur d'une plage de 0,5 à 5,0 ;
(B) un ou plusieurs types choisis parmi éther mono-n-butylique de triéthylène glycol et éther butyl-méthylique de triéthylène glycol ; et
(C) de l'eau.

2. Composition d'agent de démoussage à base de silicone hydrosoluble selon la revendication 1, comprenant en outre :
(D) un ou deux types, ou plus, d'un agent tensioactif non ionique (à l'exclusion du composant (A)) dans laquelle la valeur moyenne de rapport hydrophile-lipophile va de 2,0 à 12,0.

3. Composition d'agent de démoussage à base de silicone hydrosoluble selon la revendication 1 ou 2, comprenant en outre :
(E) de la silice hydrophobe.

4. Composition d'agent de démoussage à base de silicone hydrosoluble selon l'une quelconque des revendications 1 à 3, comprenant en outre :
(F) un organopolysiloxane ayant un groupe silanol sur une extrémité d'une chaîne moléculaire.

5. Composition d'agent de démoussage à base de silicone hydrosoluble selon l'une quelconque des revendications 1 à 4, comprenant en outre :
(G) du polypropylène glycol.

6. Composition d'agent de démoussage à base de silicone hydrosoluble selon l'une quelconque des revendications 1 à 5, dans laquelle lorsque la composition entière vaut 100 % en masse,
la quantité de composant (A) ci-dessus est à l'intérieur d'une plage de 1 à 70 % en masse,
la quantité de composant (B) ci-dessus est à l'intérieur d'une plage de 1 à 50 % en masse,
la quantité de composant (C) ci-dessus est à l'intérieur d'une plage de 1 à 70 % en masse,
la quantité de composant (D) ci-dessus est à l'intérieur d'une plage de 0 à 40 % en masse,
la quantité de composant (E) ci-dessus est à l'intérieur d'une plage de 0 à 5 % en masse,
la quantité de composant (F) ci-dessus est à l'intérieur d'une plage de 0 à 10 % en masse, et
la quantité de composant (G) ci-dessus est à l'intérieur d'une plage de 0 à 50 % en masse.

7. Composition d'agent de démoussage à base de silicone hydrosoluble selon l'une quelconque des revendications 1 à 6, dans laquelle la composant (A) ci-dessus est (A1) une silicone à modification polyéther ou un mélange de celles-ci, dans laquelle la valeur moyenne de rapport hydrophile-lipophile est à l'intérieur d'une plage de 1,0 à 4,0,
la quantité de composant (B) ci-dessus est à l'intérieur d'une plage de 10 à 150 parties en masse par rapport à 100 parties en masse de composant (A) ci-dessus, et la quantité de composant (C) ci-dessus est à l'intérieur d'une plage de 1 à 200 parties en masse par rapport à 100 parties en masse de composant (A) ci-dessus.

8. Composition d'agent de démoussage à base de silicone hydrosoluble selon l'une quelconque des revendications 1 à 7, comprenant en outre :
(D1) un éther monoalkylique de polyoxyalkylène ou un mélange de ceux-ci, dans laquelle la valeur moyenne de rapport hydrophile-lipophile vaut 11 ou moins.

9. Composition d'agent de démoussage à base de silicone hydrosoluble selon l'une quelconque des revendications 1 à 8, qui est un additif de peinture à base d'eau.

10. Peinture à base d'eau, comprenant la composition d'agent de démoussage à base de silicone hydrosoluble selon l'une quelconque des revendications 1 à 8.

11. Peinture à base d'eau selon la revendication 10, dans laquelle la quantité d'un composant conservateur ou désinfectant est de 0,05 % en masse ou moins de la peinture à base d'eau totale.

12. Procédé de démoussage d'une peinture à base d'eau, comprenant une étape d'ajout à une fraction solide d'un ou plusieurs types d'une peinture à base d'eau, de la composition d'agent de démoussage à base de silicone hydrosoluble selon l'une quelconque des revendications 1 à 8 à raison de 0,01 à 2,0 % en masse en termes de fraction solide.

13. Procédé de préservation de la qualité d'une peinture à base d'eau, comprenant une étape d'ajout à une fraction solide d'un ou plusieurs types d'une peinture à base d'eau, de la composition d'agent de démoussage à base de silicone hydrosoluble selon l'une quelconque des revendications 1 à 8 à raison de 0,01 à 2,0 % en masse en termes de fraction solide.
